# EUROPEAN PATENT APPLICATION

(11) **EP 4 831 584 A1**
(43) Date of publication of application: **28.10.2026**
(21) Application number: 25172614.7
(22) Date of filing: 25.04.2025
(51) Int. Cl.: G01B 11/25, F21V 8/00, G02B 6/04, G02B 27/09

(54) **LIGHT SOURCE FOR PROVIDING LIGHT FOR USE IN LIGHT TRIANGULATION PERFORMED BY AN IMAGING SYSTEM FOR THREE-DIMENSIONAL IMAGING, AND SUCH IMAGING SYSTEM**

(71) Applicant: Sick IVP AB, 583 30 Linköping (SE)
(72) Inventor: MURHED, Anders, 582 46 Linköping (SE)
(74) Representative: Bergenstråhle & Partners AB

(57) **Abstract**

A light source (510, 610) for providing light used in light triangulation comprising a light emitting unit (502, 602) for emitting light (511, 611), and a light guiding unit (560, 660), wherein the light guiding unit (560, 660) comprises an input end (561, 661), an output end (562, 662) and a bundle of optical fibers (572, 672) having a first end (581, 681), said first end (581, 681) having a first cross-section (569, 669), said first cross-section (569, 669) having an outline shape for receiving said light (511, 611), wherein said second end (582, 682) has a second cross-section (570, 670) having an outline shape corresponding to a straight line, the straight line being formed by the optical fibers (563, 564, 663, 664) of the bundle (572) being arranged adjacent to each other in one or more layers.

## Description

### TECHNICAL FIELD

Embodiments herein generally relate to three-dimensional (3D) imaging based on light triangulation. More particularly they relate to a light source for providing light part of the light triangulation performed by an imaging system for 3D imaging based on light triangulation and to such imaging system comprising the light source.

### BACKGROUND

Industrial vision cameras and systems for factory and logistic automation may be based on three-dimensional (3D) machine vision, where 3D-images of a scene and/or object are captured. By 3D-images it is referred to images that comprise also "height", or "depth", information and not, or at least not only, information, such as intensity and/or color, regarding pixels in only two-dimensions (2D) as in a conventional image. That is, each pixel of the image may comprise information associated with the position of the pixel and that maps to a position of what has been imaged, e.g. the object. Processing may then be applied to extract information on characteristics of the object from the 3D images, i.e. 3D-characteristics of the object, and for example convert to various 3D image formats. Such information on height may be referred to as range data, where range data thus may correspond to data from height measurement of the object being imaged, or in other words from range or distance measurements of the object. Alternatively, or additionally, the pixel may comprise information on e.g. material properties such as relating to the scattering of the light in the imaged area or the reflection of a specific wavelength of light.

Hence, a pixel value may relate to intensity of the pixel and/or to range data and/or to material properties.

Line scan image data results when image data of an image is scanned or provided one line at a time, e.g. by camera with a sensor configured to sense and provide image data, one line of pixels at a time. A special case of line scan image is image data provided by light triangulation using a "sheet of light" illuminating an object that is scanned by the light. The sheet of light intersecting with the object results in a light line projected on and reflected by the object. Typically, a laser is used, resulting in a laser line on and reflected by the object towards a camera. Laser is often preferred, and the light triangulation is then sometimes referred to as laser triangulation but also other light sources able to provide a "sheet of light", that is, a light plane, or other structured light can be used. That is, light sources able to provide light that stays focused and do not spread out too much, or in other words, light that is "structured", for example light provided by a laser or Light Emitting Diode (LED). Hence, in general, light triangulation as mentioned above is based on using structured light for the illumination.

Structured light corresponds to a defined, typically predefined, pattern of light for illuminating of the object as part of the light triangulation. Often, as indicated above, the structured light in the form of a light plane that, when it illuminates the object surface, result in a light line projected on and reflected by the object surface and imaged by the camera. Other examples of structured light include a light edge of illumination provided over a greater area, which can be considered to correspond to a thick light line illuminating the object, where the light edge projected on the object corresponds to and may be used correspondingly as the light line in the light plane case. Also, other structured light may be used for illumination of the object in light triangulation, for example that results in lines, dots, grids, bars, etc. projected on and reflected from the object surface.

In any case, the structure of the structured light makes it possible to identify real world positions where the reflections on the object surface occurred, for example in the light plane if the structured light corresponds to a light plane, and map these positions on the image sensor, and in the image, where the light, for example reflected light line, is captured. As should be recognized, this is a fundamental principle of light triangulation based 3D imaging.

3D machine vision systems are often based on light triangulation as above. In such a system there is a light source illuminating the object with the structured light, such as a light plane resulting in a light line on the object and along which line 3D characteristics of the object can be captured, corresponding to a profile of the object. By scanning the object with such a line and performing a line scan of the object, which involves movement of the line and/or object, 3D characteristics of the whole object can be captured, corresponding to multiple profiles.

Typically, to produce a 3D-image based on light triangulation, reflected light from an object to be imaged is captured by an image sensor of a camera, for example resulting in imaging of a light line projected on the object. Intensity peaks are then detected in the resulting image data. The peaks occur at positions, in sensor coordinates, corresponding to locations on the object that reflected the light captured by the image sensor. With mapping, typically known from a calibration procedure at setup of the imaging system, between real world coordinates where the light is provided and image sensor coordinates where the reflected light is captured, the image data contain said height information about the object where the reflections occurred. Typically, but not necessary, the imaging system is setup so that intensity peaks relating to reflected light should occur and be expected per column of the sensor and the position within the column maps to height.

So called laser speckle or speckles appear in the light projected on the object surface when laser light is used as light source. Said speckles, also referred to as speckle pattern or speckle noise correspond to the granular structure observed in coherent light, resulting from random interference. Thus, the laser speckles, inherent with the use of laser, result in noise that negatively affects accuracy of 3D data outputted from a 3D imaging system based on light triangulation.

Therefore, there is a need for a light source that can be used in a 3D imaging system based on light triangulation with no or at least less impact from speckles. Preferably speckles in the light line projected on an object being 3D imaged should be eliminated.

### SUMMARY

In view of the above, an object is to provide one or more improvements or alternatives to the prior art, such as providing a light source that can project a light line with no or less speckles on the object, where the light line is for use in light triangulation that a 3D imaging system is based on.

According to a first aspect of the present disclosure there is disclosed a light source for providing light for use in light triangulation performed by an imaging system for three-dimensional imaging of an object based on light triangulation. The light source is comprising a light emitting unit for emitting light and a light guiding unit. The light guiding unit comprises an input end, an output end and a bundle of optical fibers, having a first end connected to the input end and a second end connected to the output end, and that is arranged to guide the light from the first end to the second end. Said input end is arranged to receive the light generated by the light emitting unit and to input the light into said first end of said bundle of optical fibers. Said first end having a first cross-section that has an outline shape for receiving said light. Said second end has a second cross-section having an outline shape corresponding to a straight line. The straight line being formed by the optical fibers of the bundle being arranged adjacent to each other in one or more layers, such that the thickness of the straight line is determined by optical fiber diameter and number of such layers, whereby the light through the output end can be provided as a light plane with thickness determined by said thickness of the straight line.

According to a second aspect of the present disclosure there is disclosed an imaging system for three-dimensional imaging of an object based on light triangulation. The imaging system comprises a camera and a light source according to the first aspect wherein the light source is arranged to emit light onto the object such that said light is reflected by the object and captured by the camera as part of said light triangulation.

The light plane may thus be emitted and be projected as light line onto the object, as part of light triangulation for 3D imaging of the object. Thanks to the guidance and shaping by the fibers the light line can be with no or at least reduced speckle effect, thereby for example enabling higher imaging accuracy, at the same time as optical power waste can be kept small.

### BRIEF DESCRIPTION OF THE DRAWINGS

Examples of embodiments herein are described in more detail with reference to the appended schematic drawings, which are briefly described in the following.
Figure 1 schematically illustrates an example of a prior art imaging system for 3D imaging based on light triangulation that embodiments herein may be based on.
Figures 2A-B schematically illustrates a situation and some relations present for prior art imaging systems as in Figure 1.
Figure 3 schematically illustrates a situation for prior art imaging systems that may result in speckle in the light line projected on the object.
Figure 4 schematically illustrates a light source in prior art which projects speckle light on the object.
Figure 5 schematically illustrates a light source, according to exemplary embodiments.
Figure 6 schematically illustrates a light source, according to other exemplary embodiments.
Figure 7 schematically illustrates a light guiding unit, according to yet other exemplary embodiments.
Figure 8 schematically illustrates imaging system for 3D imaging based on light triangulation according to some exemplary embodiments herein.

### DETAILED DESCRIPTION

Embodiments herein are exemplary embodiments. It should be noted that these embodiments are not necessarily mutually exclusive. Components from one embodiment may be tacitly assumed to be present in another embodiment and it will be obvious to a person skilled in the art how those components may be used in the other exemplary embodiments.

As a part of the development towards embodiments herein, the situation discussed in the Background will first be further elaborated upon and discussed.

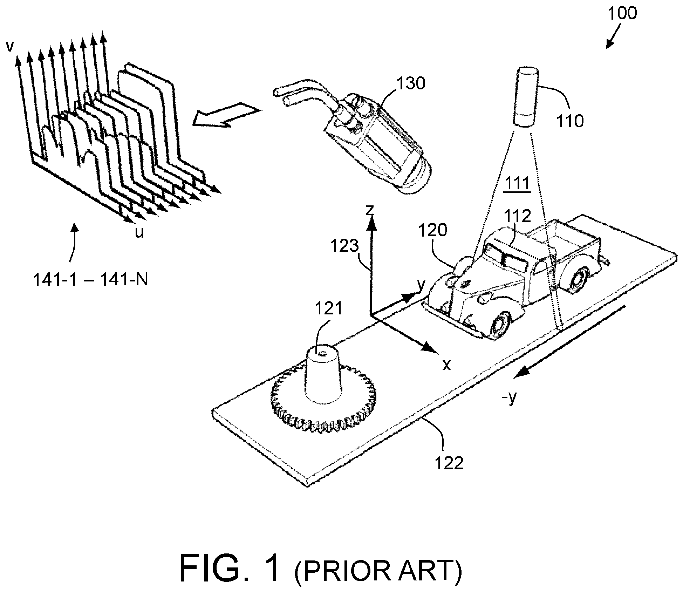

**Figure 1** schematically illustrates an example of a prior art imaging system 100 for 3D imaging based on light triangulation that embodiments herein may be based on. The imaging system 100 may alternatively, for example, be named an imaging system for 3D machine vision based on light triangulation for capturing information on 3D characteristics of target objects. The imaging system 100 is in the figure shown in a situation of normal operation, that is, typically after calibration has been performed and the system is thus calibrated. The imaging system 100 is configured to perform light triangulation, here in the form of sheet of light triangulation, that is, light triangulation where the structured light being a light plane is used. The imaging system 100 further comprises a light source 110, such as a laser, for illumination of objects to be imaged with structured light, typically a specific light pattern. In the example and figure there is structured light 111 in the form of a light plane. The light may, but not need to be, laser light, it may alternatively for example be light from one or more Light Emitting Diodes (LEDs). Another example of structured light that is similar to with similar effect, but not what conventionally is regarded, a light plane, is a light edge, that is, an edge of an area with illumination. The generated light and illumination are typically provided through one more lenses, for example in order to focus the light. Moreover, the camera is typically configured and located so that it, based on the so called Scheimpflug principle, will have a focus plane co-located with, in other words, aligned, with the structured light 111, typically light plane. This way object reflections that occur in the light plane will be in focus in the image sensor. In the shown example, the objects subject to the imaging are exemplified by a first object 120 in the form of a car and a second object 121 in the form of a gear wheel construction. The objects that are imaged may be referred to as measure objects. When the structured light 111 is incident on an object, this corresponds to a projection of the structured light 111 on the object, which may be viewed upon as the structured light 111 intersects the object. For example, in the shown example, the structured light 111 in the form of the light plane results in a light line 112 on the first measure object 120. The structured light 111 is reflected by the object, more specifically by portions of the object at the intersection, that is, at the light line 112 in the shown example. The imaging system 100 further comprises a camera 130 comprising an image sensor (not shown in Figure 1). The camera and image sensor are arranged in relation to the light source 110 and the objects to be imaged so that the structured light 111, when reflected by the objects, become incident on the image sensor. The image sensor is an arrangement, typically implemented as a chip, for converting incident light to image data. Said portions of the object, which by reflection causes said incident light on the image sensor, may thereby be captured by the camera 130 and the image sensor, and corresponding image data may be produced and provided for further use. For example, in the shown example, the structured light 111 will, at the light line 112 on a portion of the car roof of the first object 120, be reflected towards the camera 130 and image sensor, which thereby may produce and provide image data with information about said portion of the car roof. In accordance with the principle of light triangulation, with knowledge of the geometry of the imaging system 100,for example how image sensor coordinates relate to world coordinates, such as coordinates of a coordinate system 123, such as Cartesian coordinates, relevant for the object being imaged, the image data may be converted to information on 3D characteristics, for example in the form of a 3D shape or profile, of the object being imaged in a suitable format. The information on said 3D characteristics may comprise data describing 3D characteristics in any suitable format.

By moving the light source 110 and/or the object to be imaged, such as the first object 120 or the second object 121, so that multiple portions of the object are illuminated and cause reflected light sensed in images by the image sensor, in practice typically by scanning the objects with the structured light 111, image data describing a more complete 3D shape of respective object may be produced, for example corresponding to multiple, consecutive, profiles of respective object, such as the shown profile images 140-1 - 140-N of the first object 120. Each profile image shows a contour of the first object 120 where the structured light 111 was reflected when the image sensor of the camera unit 130 sensed the light resulting in the profile image. As indicated in the figure, a movable object support structure 122, such as a conveyor belt or similar, may be used to move, and thereby scan, objects through the structured light 111, with the light source 110 and the camera unit 130 typically stationary. Alternatively, the structured light 111may be moved over the object so that all portions of the object, or at least all portions facing the light source 110, are illuminated and the camera receives light reflected from all parts of the object desirable to image.

As understood from the above, respective image, or image frame, provided by the camera 130 and its image sensor, for example during imaging of the first object 120, may correspond to, or be used to provide, any one of the profile images 140-1 - 140-N. Each position of the contour of the first object shown in any of the profile images 140-1 - 140-N are typically determined based on identification of intensity peaks in image data captured by the image sensor and on finding the positions of these intensity peaks. The imaging system 100 and conventional peak finding algorithms are typically configured to, in each image frame, search for an intensity peak per pixel column. If sensor coordinates are *u, v* and for example *u*, as indicted in the figure, corresponds to pixel positions along rows in the image sensor and *v* corresponds to pixel positions along columns, there is for each position *u* of an image frame searched for peak position along v and the identified peaks in an image frame may result in one such "clean" profile image as shown in the figure, and the total of image frames and profile images can be used to create a 3D image of the first object 120.

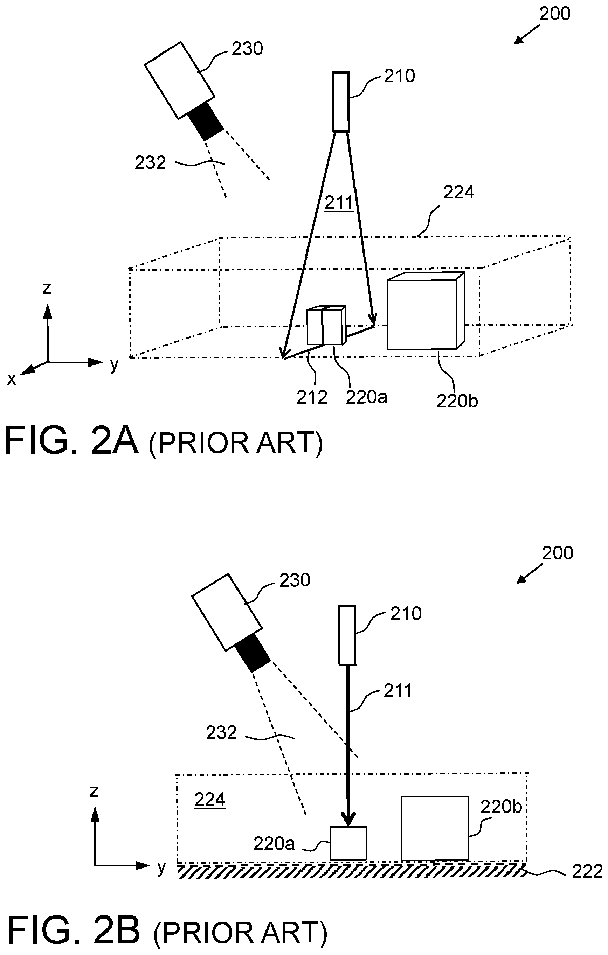

**Figures 2A-B**schematically illustrates a situation and some relations present for prior art imaging systems as in Figure 1, where Figure 2A is a 3D view and Figure 2B is a 2D side view of what is shown in Figure 2A. The system shown may correspond to the imaging system 100 but is shown in an even more schematic and simple view and to draw attention to and explain some particulars associated with such system. Details shown in the figure are to facilitate understanding of and for later comparison with embodiments herein presented further below. The shown imaging system 200 can be considered to correspond to a basic configuration and comprises: A first light source 210 for illuminating an object 220a with structured light 211 as part of light triangulation for 3D imaging of the object 220a. The structured light 211 is also here provided in the form of a light plane and may correspond to the structured light 111. A camera 230 with image sensor 231 arranged for sensing reflected first light from the object 220a as part of said light triangulation for the 3D imaging, that is, configured and positioned in relation to each other for the light triangulation. This typically involves that the first light source 210 and the camera 230 are arranged at predetermined fixed positions and with known relations to each other for the light triangulation. The camera 230 has a field of view 232 covering the light plane at least partly, particularly a portion thereof where the object 220a, and other objects, e.g., 220b, the system is configured to image, may intersect the light plane.

In a system as in the figure, and also in prior art imaging system in general for 3D imaging based on light triangulation, such as shown in Figure 1, there is a virtual volume, in Figures 2A-B schematically exemplified and explicitly indicated by dashed lines in the figure as a virtual volume 224. As used herein, virtual volume, such as the virtual volume 224, corresponds to a volume where one or more objects, for example objects 220a-b shown in the figure, that the imaging system 200 is configured to image, are present during the imaging. The virtual volume comprises where the structured light is present for illumination of, and thus intersecting, an object during the imaging. Further, the virtual volume extends on both sides of the structured light, both towards and away from the camera. The structured light 111 thus provided so it intersects the virtual volume, as shown in the figure. In the figure the structured light 111 is shown in a situation where it intersects the virtual volume 224 and the object 220a, resulting in that a light line 212 is projected on the object 220a and on an object support structure 222 at the "bottom" of the virtual volume 224, for example corresponding to a surface of the conveyor belt in the example of Figure 1. A maximum object height supported by an imaging system typically determines the height of the virtual volume and thus where the structured light first reaches the virtual volume.

In the figures there are also shown exemplifying real world cartesian coordinate systems, xyz and xy, for reference.

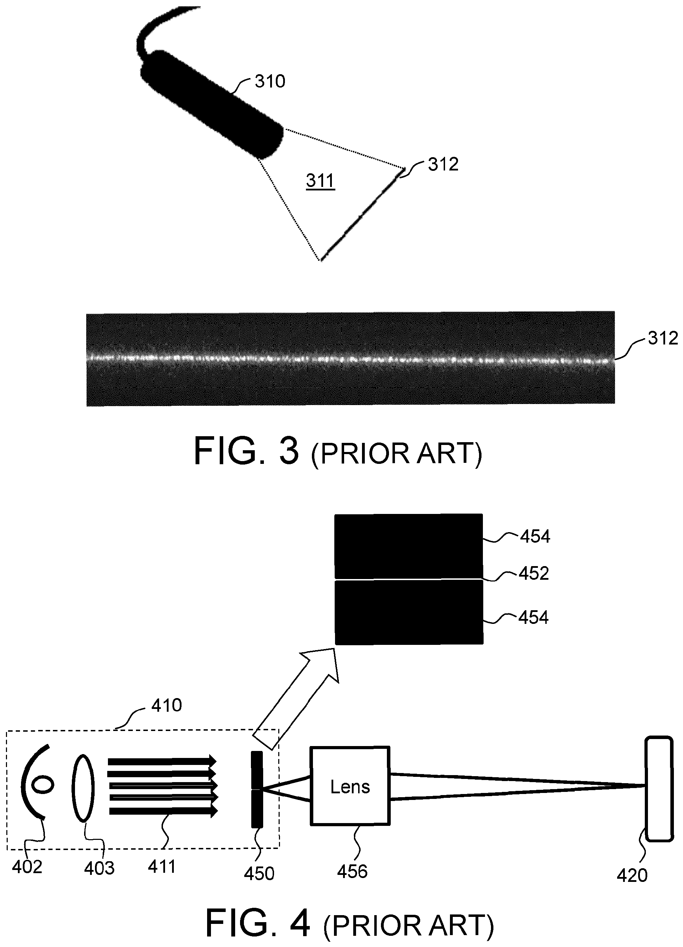

As discussed in Background and shown in **Figure 3****,** the speckles may appear in a line 312 when the light source 310 is a laser, emitting the light 311 on the object (not shown). The irregular dots shown in the line 312 correspond to the speckles.

To solve the speckle problem mentioned above, there are two solutions in prior art. The principle of one such solution is shown in **Figure 4** that schematically illustrates a prior art light source 410 that projects a light line on an object 420 with no speckles since laser is not used. In this solution, the light source 410 comprises a light emitting unit 402, a lens 403 and a slit unit 450. The light emitting unit 402 is a LED. The lens 403 is used to refract the light emitted from the light emitting unit 402 to parallel light beams 411. For example, the lens 403 can be a converging lens (convex lens). The slit unit 450 comprises light blocking parts 454 and a slit 452 which is a straight aperture between the light blocking parts 454. The light blocking parts 454 are arranged so that the slit unit 450 only lets light passing through the aperture/slit 452. The light blocking part 454 may comprise a light absorbing material and/or surface, for example a dark and preferably matte surface, and/or opaque material. It may even comprise a reflective surface although this is typically not preferred because reflected light may then end up in undesirable places and disturb the light. The slit 452 allows a portion of the light beams 411 to pass through it and thereby the light that passes will form a light plane that will project as a light line on the object 420. In other words, the light outputted from the slit unit 450 projects as a light line on the object 420 with no speckles at the object 420, after passing through another lens 456, since no laser light is used. The lens 456 is focusing the light outputted from the slit unit 450 onto the object 420.

This solution sort thus solves the speckle problem. However, a very big portion of the parallel light beams 411 is blocked by the light blocking parts 454 and only a very small portion of parallel light beams 411 passes through the slit unit 450 due to a narrow width of the slit 452. The blocked big portion of the light beams 411 is wasted power and energy, that is, only the small portion of the light beams 411 passing the slit will actually be used as projected light on the object 420. This results in a very low energy efficiency and light of low power being projected and used for 3D imaging. This type of light source can therefore typically only be used in low-speed 3D imaging application. In an example, the light emitting unit 402 generates light having 45W optical power, but only 1 mW optical power is outputted from the slit unit 450.

Another of said two solutions in the prior art for solving speckle problem is based on using a special laser as the light source, causing less speckles than a standard laser. However, such special laser is expensive and complex in design. Furthermore, it has not yet been proven in industry regarding long term stability.

Hence, there is a need for further improvements regarding a light source for providing light to be used in light triangulation performed by a 3D imaging system, for example a light source that can provide a light plane that can be projected as a light line on the object with reduced speckle effect, or without speckles, and with lower optical power waste. Such light source should preferably also enable cost-effective implementation and/or long-term stability.

The core idea of present disclosure is utilizing a light guiding unit which can change a light beam shape while guiding the light. The light guiding unit should receive as much light as possible from the light emitting unit at its input end, guide the received light to the output end, and the outputted light is then provided as a light plane, for example with corresponding thickness as a conventional light plane provided by laser used in light triangulation. Since the light guiding unit changes the shape of the light beam by guidance instead of by blocking the light beam as in the prior art and as shown in fig 4, the light loss is quite small. Concentrated high-quality light shaped as a light plane can be provided without speckles and with very low instead of very high optical power waste.

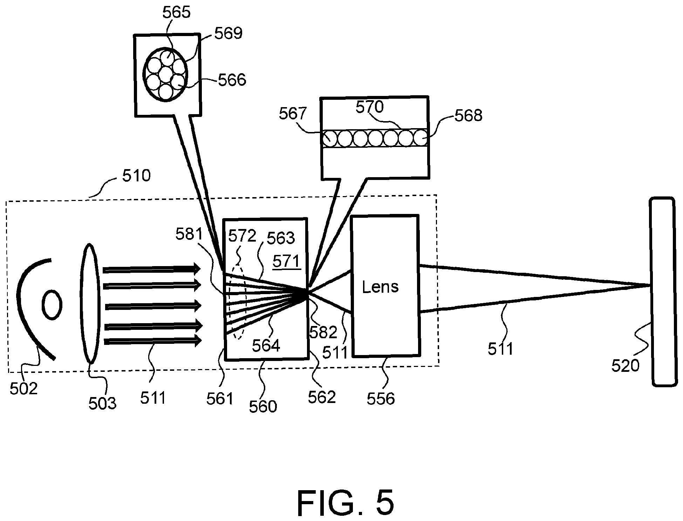

**Figure 5** schematically illustrates a light source according to some embodiments herein. A light source 510 for providing light for use in light triangulation performed by an imaging system is disclosed. The imaging system is for three-dimensional imaging of an object 520 based on light triangulation using light from the light source 510. The light source 510 comprises a light emitting unit 502 for emitting light 511, and a light guiding unit 560. The light guiding unit 560 comprises an input end 561 an output end 562, and a bundle of optical fibers 572 having a first end 581 connected to the input end 561, and a second end 582 connected to the output end 562. The light guiding unit 560 is arranged to guide the light 511 from the first end 581 to the second end 582. Said input end 561 is arranged to receive the light 511 generated by the light emitting unit 502 and to input the light 511 into said first end 581 of said bundle of optical fibers 572. Said first end 581 has a first cross-section 569 having an outline shape for receiving said light 511. Said second end 582 has a second cross-section 570 having an outline shape corresponding to a straight line. The straight line is formed by the optical fibers 563, 564 of the bundle 572 being arranged adjacent to each other in one or more layers, such that the thickness of the straight line is determined by optical fiber diameter and number of such layers, whereby the light 511 through the output end 562 can be provided as a light plane with thickness determined by said thickness of the straight line.

Referring to figure 5, a light source 510 is used as a light source for 3D imaging of the object 520. The light source 510 comprises a light emitting unit 502 and a light guiding unit 560. The light emitting unit 502 may be a laser, a LED or other type of light emitting component, and emits light beams 511. The light source 510 may comprise a lens 503 to refract the light emitted from the light emitting unit 502 to parallel light beams 511. For example, the lens 503 may be a converging lens (convex lens). Further optionally, the light source 510 may comprise a lens 556 which is arranged after the light guiding unit 560. This will be discussed further below.

The light guiding unit 560 comprises an input end 561 and an output end 562. The light guiding unit 560 also comprises a bundle of optical fibers 572 having a first end 581 connected to the input end 561 and a second end 582 connected to the output end 562. Therefore, the input end 561 of the light guiding unit 560 and the first end 581 of the bundle of optical fibers 572 receives the light beams 511 emitted from the light emitting unit 502. The bundle of optical fibers 572 comprises multiple optical fibers 563, 564. The ways of bundling the multiple optical fibers 563, 564 are not restricted, e.g., parallelled, twisted, curved, as long as a first end 581 and a second end 582 are formed. The light guiding unit 560 may also comprise a fixing part 571 for fixing the bundle of optical fibers 572. The fixing part 571, for example of plastic or other material, preferably has a light absorbing surface, such as dark and preferably matte to reduce the risk that the fixing part causes disturbing reflections.

Upon receiving the light 511 at the input end 561 of the light guiding unit 560 and the first end 581 of the bundle 572, the inputted light is guided along the bundle of optical fibers 572 and outputted by the second end 582. The first end 581 has a first cross-section 569, which comprises cross-sections 565, 566 of the multiple optical fibers 563, 564. The first cross-section 569 should have an outline shape to be able to receive as much light 511 as possible from the light emitting unit. The second end 582 has a second cross-section 570, which comprises cross-sections 567, 567 of the multiple optical fibers 563, 564. At the second end 582 of the bundle 572, the multiple optical fibers 563, 564 are arranged adjacent to each other in a straight line or in one or more layers of a straight line, so that the light outputted by the second end 582 is provided as a light plane with thickness determined by individual optical fiber cross-section 567, 568 diameter and the number of layers. As shown in figure 5, since the optical fibers 563, 564 are arranged in a straight line with one layer at the second end 582, the width of the second cross-section 570 is determined by individual optical fiber cross-section 567, 568 diameter. If the optical fibers are arranged in multiple layers as a straight line at the second end 682, the width, or thickness, of the second cross-section and thus the straight line is determined by individual optical cross-section 567, 568 diameter and the number of the layers. The optical fibers of the bundle should have the same or substantially the same optical fiber diameter. In case of different diameters, the thickness of the straight line formed by the second cross-section is limited by the largest fiber diameter.

In embodiments as illustrated by figure 5, the light 511 emitted from the light emitting unit 502 is preferably, to the greatest possible extent, input via the first cross-section 569, into the bundle of multiple optical fibers 572. That is, preferably so that substantially all emitted light is input to the fibers, in other words with high and preferably highest possible efficiency. Since the outline of the first cross-section 569 at the input can be formed, such as shaped, independent from the second end at the output, there is great freedom in applying various known measures for coupling substantially all light being emitted from for example a LED into the bundle of optical fibers 572. The light is guided through the bundle 572 and outputted as a light plane by means of the second cross-section 570. Thanks to this, the outputted light can be concentrated high-quality light which provides a light line with less or no speckles on the object 520. These embodiments correspond to a cost-effective, stable and concise solution for a light source projecting a light line with less speckles on the object 520, without having to waste a lot of optical power to accomplish this.

According to some embodiments, the outline shape of the first cross-section 569 is rectangular or elliptical, preferably circular.

Rectangular, elliptical or circular are shapes suitable for input of light, and to receive as much light as possible, from common light emitters, such as a LED arrangement.

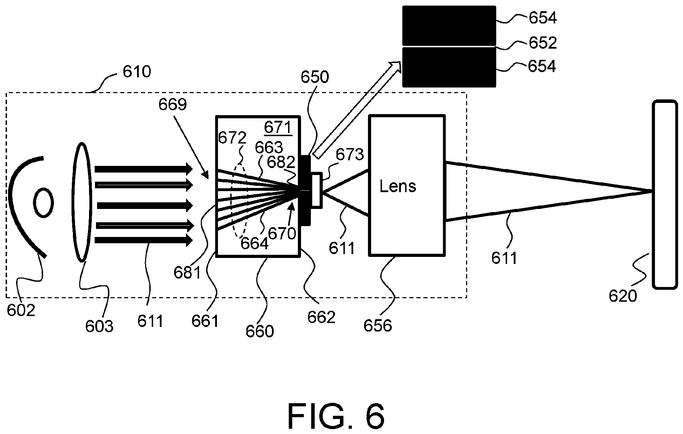

**Figure 6** schematically illustrates a light source 610, according to further exemplary embodiments. Similar to the light source 510 illustrated in fig. 5, the light source 610 comprises a light emitting unit 602 for emitting light 611, an optional lens 603, and a light guiding unit 660. The arrangement of the light guiding unit 660 is the same as in the embodiments shown in figure 5, i.e., the light guiding unit 660 comprises an input end 661, an output end 662 and a bundle of multiple optical fibers 672, which comprises multiple optical fibers 663, 664. Optionally, the light guiding unit 660 comprises a fixing unit 671 for fixing the bundle of multiple optical fibers 672, the fixing unit 671 may correspond to the fixing part 571 in figure 5. The first end 681 of the bundle 672 is connected to the input end 661 of the light guiding unit 660, and the second end 682 of the bundle 672 is connected to the output end 662 of the light guiding unit 660. The light 611 is received by the input end 661 of the light guiding unit 660 and the first end 681 of the bundle 672. The light is then guided from the first end 681 to the second end 682. Although not illustrated in detail in fig. 6, the outline shape of the first cross-section 669 of the first end 681 is used for receiving as much light as possible, which is the same as the first cross-section 569 in fig. 5. The second cross-section 670 of the second end 682 is formed by optical fibers 663, 664 arranged adjacent to each other in a straight line to provide a light plane with a thickness determined by individual optical fiber cross-section diameter, i.e., the width of the second cross-section 670 is determined by individual optical fiber cross-section diameter.

Furthermore, the light source 610 comprises a slit unit 650 that comprises a straight slit 652 whose width is narrower than the thickness of the light plane provided by the output end 662, the slit unit 650 is arranged so that the light 611 outputted from the output end 662 of the light guiding unit 660 passes through the straight slit 652, preferably by being projected onto and covering the slit 652 so that the light onto the slit 652 passes through it and any light outside the slit is blocked.

The slit unit 650 may comprises a straight slit, or a straight aperture, 652 arranged so that the output light from the second end 682 of the bundle of optical fibers 672 and the output end 662 of the light guiding unit 662 passes through the straight slit. The width of the straight slit 652 may be narrower than the thickness of the light plane outputted by the light guiding unit 660, i.e., narrower than the cross-section diameter of an individual optical fiber 663, 664. This means that an even thinner light plane and light line is achievable than directly from the second cross-section 670.

The slit unit 650 may comprise light blocking parts 654 that blocks and/or absorbs the light that does not pass through the straight slit 652.

According to some embodiments, the light source 610 further comprises an asymmetrical diffuser 673, the asymmetrical diffuser 673 being arranged so that the light 611 outputted from the output end 662 of the light guiding unit 660 or from the straight slit 652 passes through the asymmetrical diffuser 673.

The asymmetrical diffuser 673, typically an asymmetrical diffractive diffuser, is an optical component that may be used to shape light. The asymmetrical diffuser 673 spreads the input light in one, or substantially more in one, direction and may thereby smooth out irregularities along the light line caused by individual fibers while at the same time keeping spread perpendicular to the line low so that the line shape is kept and light is not unnecessarily spread and wasted outside the line in the perpendicular direction. The diffuser 673 reduces or removes irregularities in the light line caused by individual fibers and that else may look similar to speckles. It should be noted that the slit unit 650 and the asymmetrical diffuser 673 are independent of each other, i.e., in some embodiments, the light source 610 is without the slit unit 650 and the asymmetrical diffuser 673, as shown in figure 5; in some embodiments, the light source 610 comprises the slit unit 650, but without the asymmetrical diffuser 673; in some embodiments, the light source 610 further comprises the asymmetrical diffuser 673 but without the slit unit 650; and in some embodiments, the light source 610 comprises both the slit unit 650 and the asymmetrical diffuser 673, as shown in figure 6.

According to some further embodiments, the light source 510, 610 comprises a lens 556, 656 arranged to receive outputted light 511, 611 from the output end 562, 662 of the light guiding unit 560, 660, or from the straight slit 652, or from the asymmetrical diffuser 673.

Referring to figure 5 and 6, respective lens 556, 656 is arranged to receive output light from the light leading unit 560, 660, or from the straight slit 652, or from the asymmetrical diffuser 673, depending on whether the slit unit 650 or the asymmetrical diffuser 673 are present. The lens 556, 656 may be a standard lens or dedicated lens for focusing the light outputted from the light leading unit 560, 660, or from the straight slit 652, or from the asymmetrical diffuser 673.

According to some embodiments, the area of the first-cross section 569, 669 is 1 - 1.5 mm², the width of the second cross-section 570, 670 is 0.05- 0.15 mm, and the length of the second cross-section 570, 670 is 15-30 mm.

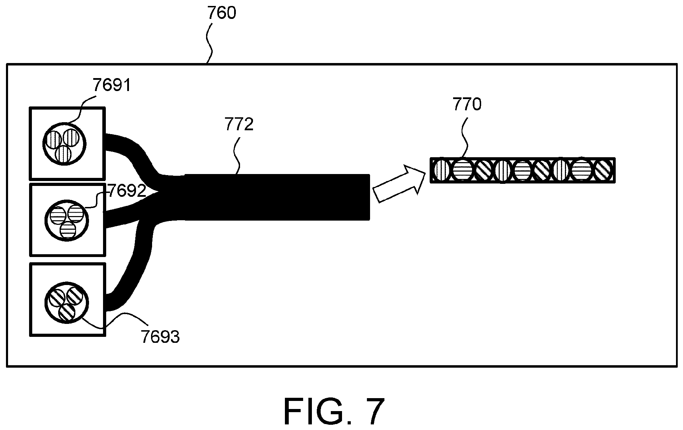

According to some embodiments, referring to **Figure 7****,** the first end of the bundle of optical fibers 772 comprises multiple sub first cross-sections 7691, 7692, 7693, each sub first cross-section 7691, 7692, 7693 is formed by a sub-bundle of the bundle of multiple optical fibers 772, respective sub first cross-section 7691, 7692, 7693 having an outline shape for receiving the light 511, 611; wherein the sub first cross-sections 7691, 7692, 7693 are operative for receiving different colors light of the light 511, 611, respectively.

A light guiding unit 760 according to these embodiments is illustrated in figure 7. A bundle 772 of multiple optical fibers are divided into multiple portions at the first end, thereby forming multiple sub first cross-sections 7691, 7692, 7693. As the example shown in fig. 7, the bundle 772 comprises 9 optical fibers, and each of the three sub first cross-sections 7691, 7692, 7693 is formed by cross-sections of three optical fibers. The multiple optical fibers of the bundle are typically, but does not need to be, evenly divided and/or distributed into the sub-bundles, and the sizes of the multiple sub first cross-sections may be different. The number of the multiple sub first cross-sections can also be changed. Although figure 7 shows three sub first cross-sections 7691, 7692, 7693, other numbers of the sub first cross-sections are also possible, e.g., two sub first cross-sections, four sub first cross-sections, as long as the sub first cross-sections can be formed by the bundle 772.

Similar to the first cross-section in other embodiments, each sub first cross-section 7691, 7692 and 7693 has an outline shape for receiving the light outputted from the light emitting unit, preferably as much as possible. Respective sub-bundle with its sub first cross-section 7691, 7692, 7693 may be operative for receiving a respective wavelength, or wavelength range, typically corresponding to a specific color such that the sub-bundle guide light of different colors, such as red, green, blue in the case of three sub-bundles. The light outputted from the light emitting unit may thus be of several different wavelength ranges, for example colors, one per sub-bundle. For example, the sub first cross-section 7691 may only receive light having wavelength corresponding to red light (illustrated by vertical lines), the sub first cross-section 7692 may only receive light having wavelength corresponding to green light (illustrated by horizontal lines), and the sub first cross-section 7693 may only receive light having wavelength corresponding to blue light (illustrated by diagonal lines). This can be implemented by e.g., that the light emitting unit comprise multiple LEDs, one for emitting light of a respective wavelength or wavelength range, such as corresponding to a color, wherein respective LED illuminates into a respective one of the sub-bundles.

On the second end of the bundle 772, the multiple optical fibers are arranged adjacent to each other in a straight line so as to form a second cross-section 770. This is thus similar to the other embodiments discussed above. A difference is the sub-bundling at the input and use of different light wavelengths, such as colors, per sub-bundle. The optical fibers of the sub-bundles may then be mixed so that there is a distribution and/or mix of wavelengths, such as colors, at the second end and that is different from the color distribution according to the sub-bundles at the first end. Another difference is that multiple different wavelengths, or wavelength ranges, for example differently colored lights, one at a time or mixed may be outputted by the second cross-section 770, e.g., red, green, blue, but also for example one or more visible light wavelengths and/or ultraviolet (UV) and/or infra-red (IR) etc. are possible. It should be noted that the multiple optical fibers can be distributed and/or mixed in many different ways in the second cross-section 770 and thus may provide a corresponding distribution and/or mix of colors, although figure 7 shows an even distribution and mix in the second cross-section 770. Hence, a light line with evenly distributed colors can be accomplished, for example corresponding to a mix of red, green and blue light. Such multi color light source may for example be used as light source in 2D line scanning of an object in full color and may additionally or alternatively be used for 3D imaging based on light triangulation in combination with 2D imaging of corresponding positions on the object, for example based on the solutions disclosed in EP4220075 and EP4502533. The additional light source for the 2D imaging in these solutions can be reduced if a light source as in embodiments herein is used as light source instead of for example a laser light source for the 3D imaging. Without speckles, the light from the light line can be used to provide also higher quality 2D imaging than possible with laser light and at therefore without the need of a separate light source for the 2D imaging.

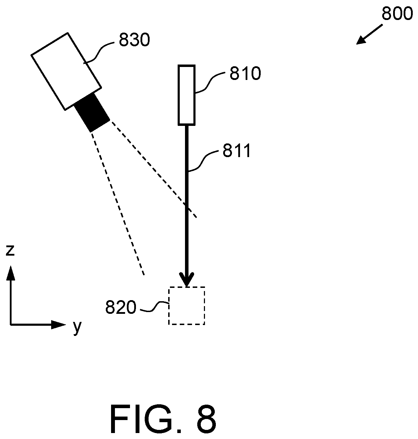

Further, according to some embodiments, an imaging system 800 for three-dimensional imaging of an object based on light triangulation is disclosed, as schematically illustrated in **Figure 8****.** The imaging system 800 comprises a camera 830 and a light source 810 that may correspond to the light source according to any one of the previous embodiments, such as any one of the light sources 510, 610. The light source 810 is arranged to emit light 811, that thus may correspond to the light 511 or 611, onto an object 820 that may correspond to any one of the objects 520, 620. The light 811 is emitted such that it is reflected by the object 820 and captured by the camera 830 as part of said light triangulation. The camera 830 may correspond to any one of the cameras 130, 230. In fact, the imaging system 800 except for the light source 810 may be as in the prior art. With reference to the three-dimensional imaging systems 100, 200 exemplified in figure 1, figure 2A and figure 2B, any one of the light sources 510, 610 according to embodiments herein may thus be used instead of the light source 110, 210 for projecting the light line 111, 211 onto the object 120, 220. The camera 830, just as any one of the cameras 130, 230 in said prior art imaging systems, may thus be used to detect the projected light line reflected by the object to generate a three-dimensional image of the object. Since the light source 810 in the imaging system 830 projects a light line without laser speckles on the object, three-dimensional imaging of the object 820 with increased accuracy can be accomplished compared to prior art imaging systems based on light triangulation for which laser speckles limit accuracy.

Note that any enumerating terminology such as first device, second device, first surface, second surface, etc., should as such be considered non-limiting and the terminology as such does not imply a certain hierarchical relation. Without any explicit information in the contrary, naming by enumeration should be considered merely a way of accomplishing different names.

As used herein, the expression "configured to" may mean that a processing circuit is configured to, or adapted to, by means of software or hardware configuration, perform one or more of the actions described herein.

As used herein, the terms "number" or "value" may refer to any kind of digit, such as binary, real, imaginary or rational number or the like. Moreover, "number" or "value" may be one or more characters, such as a letter or a string of letters. Also, "number" or "value" may be represented by a bit string.

As used herein, the expression "may" and "in some embodiments" has typically been used to indicate that the features described may be combined with any other embodiment disclosed herein.

In the drawings, features that may be present in only some embodiments are typically but not necessarily drawn using dotted or dashed lines.

When using the word "comprise" or "comprising" it shall be interpreted as nonlimiting, i.e. meaning "consist at least of".

The embodiments herein are not limited to the above-described embodiments. Various alternatives, modifications and equivalents may be used. Therefore, the above embodiments should not be taken as limiting the scope of the present disclosure, which is defined by the appending claims.

## Claims

1. A light source (510, 610) for providing light for use in light triangulation performed by an imaging system for three dimensional imaging of an object (520, 620) based on light triangulation, comprising a light emitting unit (502, 602) for emitting light (511, 611), and a light guiding unit (560, 660),
wherein the light guiding unit (560, 660) comprises an input end (561, 661), an output end (562, 662) and a bundle of optical fibers (572, 672) having a first end (581, 681) connected to the input end (561, 661) and a second end (582, 682) connected to the output end (562, 662) and arranged to guide the light (511, 611) from the first end (581, 681) to the second end (582, 682), said input end (561, 661) being arranged to receive the light (511, 611) generated by the light emitting unit (502, 602) and to input the light (511, 611) into said first end (581, 681) of said bundle of optical fibers (572, 672), said first end (581, 681) having a first cross-section (569, 669) that has an outline shape for receiving said light (511, 611), wherein said second end (582, 682) has a second cross-section (570, 670) having an outline shape corresponding to a straight line, the straight line being formed by the optical fibers (563, 564, 663, 664) of the bundle (572) being arranged adjacent to each other in one or more layers, such that the thickness of the straight line is determined by optical fiber diameter and number of such layers, whereby the light (511, 611) through the output end (562, 662) can be provided as a light plane with thickness determined by said thickness of the straight line.

2. The light source (510, 610) as claimed in claim 1, wherein the outline shape of the first cross-section (569, 669) is rectangular or elliptical, preferably circular.

3. The light source (610) as claimed in claim 1 or 2, wherein the light source (610) further comprises a slit unit (650), wherein the slit unit (650) comprises a straight slit (652) whose width is narrower than the thickness of the light plane provided by the output end (662), the slit unit (650) being arranged so that the light (611) outputted from the output end (662) of the light leading unit (660) passes through the straight slit (652).

4. The light source (610) as claimed in any one of the claims 1-3, wherein the light source (610) further comprises an asymmetrical diffuser (673), the asymmetrical diffuser (673) being arranged so that the light (611) outputted from the output end (662) of the light guiding unit (660) or from the straight slit (652) passes through the asymmetrical diffuser (673).

5. The light source (510, 610) as claimed in any one of the claims 1-4, wherein the light source (510, 610) further comprises a lens (556, 656) arranged to receive outputted light (511, 611) from the output end (562, 662) of the light guiding unit (560, 660), or from the straight slit (652), or from the asymmetrical diffuser (673).

6. The light source (510, 610) as claimed in any one of the claims 1-5, wherein the area of the first-cross section (569, 669) is in a range of 1 to 1.5 mm², the width of the second cross-section (570, 670) being in a range of 0.05 to 0.15 mm, and the length of the second cross-section (570, 670) being in a range of 15 to 30 mm.

7. The light source as claimed in any one of the claims 1-6, wherein the first end of the bundle of optical fibers (772) comprises multiple sub first cross-sections (7691, 7692, 7693), each sub first cross-section (7691, 7692, 7693) being formed by a sub-bundle of the bundled multiple optical fibers (772), respective sub first cross-section (7691, 7692, 7693) having an outline shape for receiving the light (511, 611), wherein the sub first cross-sections (7691, 7692, 7693) are for receiving different wavelengths, or different wavelength ranges, of the light (511, 611), respectively.

8. An imaging system for three dimensional imaging of an object (520, 620) based on light triangulation, the imaging system comprises a camera and a light source (510, 610) according to any one of the claims 1-7, wherein the light source (510, 610) is arranged to emit light (511, 611) onto the object (520, 620) such that said light (511, 611) is reflected by the object (520, 620) and captured by the camera as part of said light triangulation.

## Amended claims

### Amended claims in accordance with Rule 137(2) EPC.

1. An imaging system for three dimensional imaging of an object (520, 620) based on light triangulation, the imaging system comprises a camera and a light source (510, 610), wherein the light source (510, 610) is arranged to emit light (511, 611) onto the object (520, 620) such that said light (511, 611) is reflected by the object (520, 620) and captured by the camera as part of said light triangulation, wherein the light source (510, 610) comprising a light emitting unit (502, 602) for emitting light (511, 611), and a light guiding unit (560, 660),
wherein the light guiding unit (560, 660) comprises an input end (561, 661), an output end (562, 662) and a bundle of optical fibers (572, 672) having a first end (581, 681) connected to the input end (561, 661) and a second end (582, 682) connected to the output end (562, 662) and arranged to guide the light (511, 611) from the first end (581, 681) to the second end (582, 682), said input end (561, 661) being arranged to receive the light (511, 611) generated by the light emitting unit (502, 602) and to input the light (511, 611) into said first end (581, 681) of said bundle of optical fibers (572, 672), said first end (581, 681) having a first cross-section (569, 669) that has an outline shape for receiving said light (511, 611), wherein said second end (582, 682) has a second cross-section (570, 670) having an outline shape corresponding to a straight line, the straight line being formed by the optical fibers (563, 564, 663, 664) of the bundle (572) being arranged adjacent to each other in one or more layers, such that the thickness of the straight line is determined by optical fiber diameter and number of such layers, whereby the light (511, 611) through the output end (562, 662) can be provided as a light plane with thickness determined by said thickness of the straight line.

2. The imaging system as claimed in claim 1, wherein the outline shape of the first cross-section (569, 669) is rectangular or elliptical, preferably circular.

3. The imaging system as claimed in claim 1 or 2, wherein the light source (610) further comprises a slit unit (650), wherein the slit unit (650) comprises a straight slit (652) whose width is narrower than the thickness of the light plane provided by the output end (662), the slit unit (650) being arranged so that the light (611) outputted from the output end (662) of the light leading unit (660) passes through the straight slit (652).

4. The imaging system as claimed in any one of the claims 1-3, wherein the light source (610) further comprises an asymmetrical diffuser (673), the asymmetrical diffuser (673) being arranged so that the light (611) outputted from the output end (662) of the light guiding unit (660) or from the straight slit (652) passes through the asymmetrical diffuser (673).

5. The imaging system as claimed in any one of the claims 1-4, wherein the light source (510, 610) further comprises a lens (556, 656) arranged to receive outputted light (511, 611) from the output end (562, 662) of the light guiding unit (560, 660), or from the straight slit (652), or from the asymmetrical diffuser (673).

6. The imaging system as claimed in any one of the claims 1-5, wherein the area of the first-cross section (569, 669) is in a range of 1 to 1.5 mm², the width of the second cross-section (570, 670) being in a range of 0.05 to 0.15 mm, and the length of the second cross-section (570, 670) being in a range of 15 to 30 mm.

7. The imaging system as claimed in any one of the claims 1-6, wherein the first end of the bundle of optical fibers (772) comprises multiple sub first cross-sections (7691, 7692, 7693), each sub first cross-section (7691, 7692, 7693) being formed by a sub-bundle of the bundled multiple optical fibers (772), respective sub first cross-section (7691, 7692, 7693) having an outline shape for receiving the light (511, 611), wherein the sub first cross-sections (7691, 7692, 7693) are for receiving different wavelengths, or different wavelength ranges, of the light (511, 611), respectively.
